Europäisches Patentamt

European Patent Office

Office européen des brevets

(11) Veröffentlichungsnummer: **0 006 586**
A1

# (12) EUROPÄISCHE PATENTANMELDUNG

(21) Anmeldenummer: 79102065.4

(22) Anmeldetag: 22.06.79

(51) Int. Cl.³: **B 62 K 19/20**, B 23 K 33/00

(30) Priorität: 27.06.78 AT 4653/78

(43) Veröffentlichungstag der Anmeldung: **09.01.80**
**Patentblatt 80/1**

(84) Benannte Vertragsstaaten: **BE DE GB NL SE**

(71) Anmelder: **Vereinigte Metallwerke Ranshofen-Berndorf AG, Wohllebengasse 9, A-1041 Wien IV (AT)**

(72) Erfinder: **Uhlirsch, Kurt, Dipl.-Ing., Liegistrasse 4, A-5280 Braunau a. Inn (AT)**
Erfinder: **Laimighofer, Johann, Ing., Sparkassenstrasse 15, A-5280 Braunau a.Inn (AT)**

(74) Vertreter: **Hain, Leonhard, Dipl.-Ing., Tal 18/IV, D-8000 München 2 (DE)**

(54) **Fahrrad mit geschweisstem Rohrrahmen.**

(57) Bei einem Fahrradrahmen sind die Rahmenrohre (2, 3, 4) an den Enden miteinander verschweißt. Da die Schweißverbindung eine bestimmte Wandstärke der Rohre voraussetzt, sind verschweißte Fahrrad-Rohrrahmen an Gewicht verhältnismäßig schwer.

Um eine Gewichtsverminderung zu erreichen, weisen die durch Schweißen verbundenen Rahmenrohre (2, 3, 4, 8, 9) im Bereich der Schweißnähte eine größere Wanddicke auf als im dazwischenliegenden Bereich. Beträgt beispielsweise die Wanddicke an den Enden bei Stahl 1 bis 1,2 mm und bei Aluminium 1,8 bis 3 mm, so ist diese im dazwischenliegenden Abschnitt bei Stahl nur 0,4 bis 0,8 und bei Aluminium nur 0,8 bis 1,5 mm.

EP 0 006 586 A1

Anmelder: Vereinigte Metallwerke Ranshofen-Berndorf AG,
Braunau am Inn, Österreich

Titel:    Fahrrad mit geschweißtem Rohrrahmen

Beschreibung:

Bekanntlich sollen Fahrradrahmen möglichst leicht bei ausreichender Festigkeit sein und es wurden bisher dünnwandige Rohre verwendet, die an den Knotenpunkten in Muffen eingelötet sind. Die dafür erforderlichen Temperaturen bringen jedoch bei Leichtmetallen Festigkeitseinbußen mit sich, die durch Klebung umgangen werden sollen. Nachteilig ist jedoch der relativ große Aufwand und die Erhärtungszeit der Klebeverbindungen, weshalb es auch bekannt ist, Aluminiumräder zu schweißen. Die Schweißung erfordert jedoch gewisse Mindestwandstärken an den Schweißstellen, weshalb diese Räder trotz Anwendung von Leichtmetall nicht die entsprechende Gewichtseinsparung bringen.

Erfindungsgemäß sollen diese Nachteile dadurch vermieden werden, daß zumindest die Rohre des Hauptrahmens im Bereich der Schweißnähte eine größere Wandstärke aufweisen als in der Mitte. Da diese verdickten Bereiche im Vergleich zur Gesamtrohrlänge gering sind, ergibt sich dadurch eine beachtliche Gewichtseinsparung, ohne die Festigkeit wesentlich zu beeinflussen.

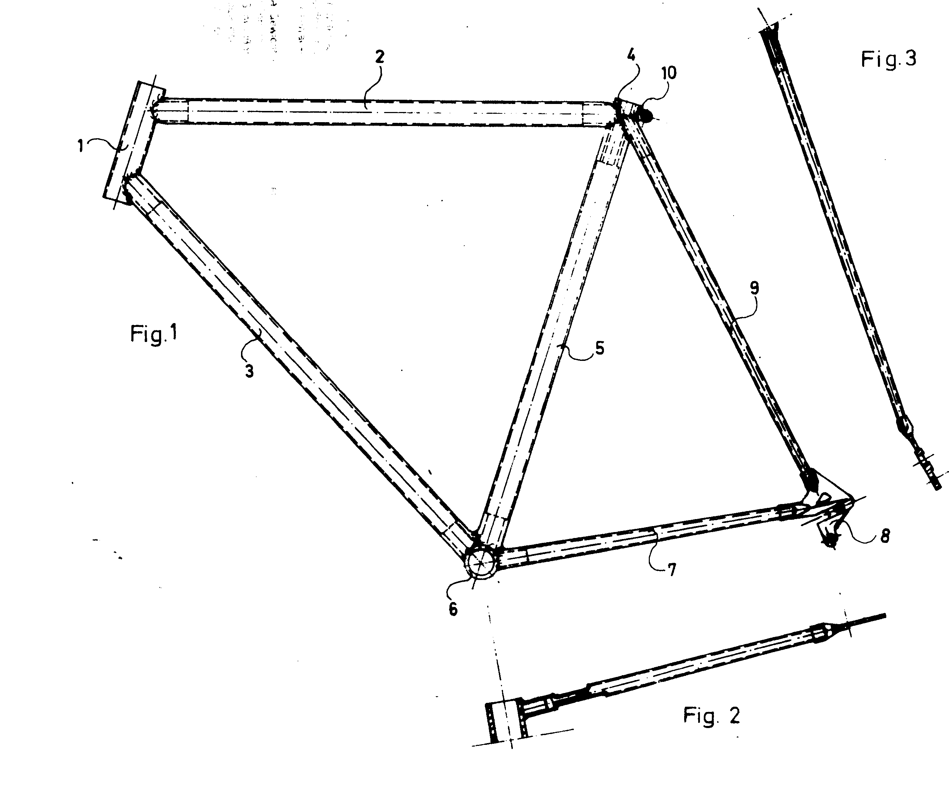

In der Zeichnung ist der Gegenstand der Erfindung beispielsweise dargestellt. Sie zeigt einen Fahrradrahmen bestehend aus Gabelrohr 1, mit diesem durch Schweißung verbundenem Kopfrohr 2 und Brustrohr 3, wobei auch die Verbindungen des Brustrohres 3 mit Tretlagerrohr 6 und Sattelrohr 4 durch Schweißung erfolgen. Auch die Verbindungen im Bereich des Sattels und des Anschlusses der Hinterrahmenrohre 7, 9 erfolgen durch Schweißung, lediglich die Verbindung dieser Rohre mit den geschmiedeten Hinterachslagerungen 8 erfolgt durch Klebung, kann je-doch auch durch Schweißung ausgeführt werden. Auch die Klemmschenkel 10 für den Sattel sind angeschweißt. Um an den Schweißstellen die notwendige Materialstärke zu besitzen, sind die Rahmenrohre im Bereich ihrer ange-schweißten Enden nach innen verdickt ausgeführt, so daß sie in der Mitte eine geringere Wandstärke aufweisen. Außen ist somit ein gleichbleibender Durchmesser sichtbar. Die Herstellung dieser Rohre erfolgt durch spanabhebendes Ausreiben oder Ausdrehen oder aber durch spanlose Formgebung mittels Ziehen, Strangpressen oder Walzen, wobei ein axial verschiebbarer, gestufter Dorn verwendet wird. Als Material werden vorzugsweise die aushärtbaren und eloxierbaren Aluminiumlegierungen AlZnMg 1 oder AlMgSi 1 verwendet, wobei als Schweißzusatzwerkstoff gleichartiges Material oder AlMg5 verwendet wird mit dem Vorteil, daß Festigkeit und Eloxierbarkeit im Bereich der Schweißnähte erhalten bleiben. Erstere Legierung ist luftaushärtend und bei der zweiten kann zur Wiederherstellung der vollen Festigkeit eine nachträgliche Wärmebehandlung des ganzen Rahmens erfolgen. Als Wandstärke für die Rohre wird bei Stahl an den Enden 1 bis 1,2 mm gewählt, in der Mitte 0,4 bis 0,8 und bei Aluminium an den Enden 1,8 bis 3 mm und in der Mitte 0,8 bis 1,5 mm. Die Länge der Verdickung ist vorzugsweise ungefähr gleich dem ein- bis eineinhalbfachen Durchmesser. Die

Schweißung erfolgt vorzugsweise als elektrische Argonschutzgasschweißung.

Die Erfindung ist auf das dargestellte Ausführungsbeispiel nicht beschränkt. Es können auch die Verbindungen im Bereich der hinteren Radlagerstücke geschweißt ausgeführt werden und es ist auch möglich, die Rohre nach außen zu verdicken, so daß die Absetzungen sichtbar sind, während der innere Durchmesser gleichbleibend ist.

Anmelder: Vereinigte Metallwerke Ranshofen-Berndorf AG
Braunau am Inn, Österreich

Titel:     Fahrrad mit geschweißtem Rohrrahmen

<u>Patentansprüche</u>

1. Fahrrad mit geschweißtem Rohrrahmen, dadurch gekennzeichnet, daß zumindest die Rohre (2, 3, 4) des Hauptrahmens im Bereich der Schweißnähte eine größere Wandstärke aufweisen als in der Mitte.

2. Fahrrad nach Anspruch 1, dadurch gekennzeichnet, daß die Rohre (2, 3, 4, 8, 9) an den Enden nach innen verdickt sind, wobei die Enden bei Stahl 1 - 1,2 und bei Aluminium 1,8 - 3 mm Wandstärke aufweisen und in der Mitte bei Stahl 0,4 - 0,8 und bei Aluminium 0,8 - 1,5 mm besitzen.

3. Fahrrad nach Anspruch 1 oder 2, dadurch gekennzeichnet, daß die Rohre (2, 3, 4, 8, 9) spanabhebend ausgenommen oder durch Strangpressen, Ziehen oder Walzen mit axial verschiebbarem, gestuftem Dorn hergestellt sind.

4. Fahrrad nach einem der Ansprüche 1 bis 3, dadurch gekennzeichnet, daß als Material AlZnMg 1 oder AlMgSi 1 verwendet wird, wobei der Schweißzusatzwerkstoff gleichartig oder AlMg 5 ist und Argonschutzgasschweißung angewendet wird.

1/1

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 245 520 (ATELJERS DE LA RIVE)<br><br>* Figuren 1-10; Seite 2, Zeilen 24-40; Seite 3, Zeilen 1-9 *<br><br>-- | 1 |
| | FR - A - 1 259 364 (T.I. ALUMINIUM)<br><br>* Figuren 1-9; Zusammenfassung *<br><br>-- | 3 |
| | WELDING AND METAL FABRICATION, Band 43, Nr. 10, Dezember 1975, Sussex, UK,<br>K.R. SPILLER: "Positional tig welding of aluminium pipe", Seiten 733-737,746<br><br>-- | 4 |
| | SCHWEISSEN UND SCHNEIDEN, Jahrgang 26, Heft 6, Juni 1974,<br>Düsseldorf, DE<br>Dr. ING. D. KOSTEAS: "Beitrag zum Zeit und Dauerfestigkeitsverhalten von AlZnMg$_1$ und AlMg$_{4,5}$Mn"<br><br>-- | 4 |
| A | CH - A - 249 931 (ALUMINIUM-INDUSTRIE AG)<br><br>* Abbildungen 1-6; Ansprüche *<br><br>-- | 1 |
| A | FR - A - 1 019 679 (COGEVIL)<br>* Zusammenfassung *<br><br>-- | 1 |
| A | FR - A - 641 900 (PY)<br>* Zusammenfassung *<br><br>---- | 1 |

### KLASSIFIKATION DER ANMELDUNG (Int.Cl. 3)

B 62 K 19/20
B 23 K 33/00

### RECHERCHIERTE SACHGEBIETE (Int. Cl 3)

B 62 K
B 23 K

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-10-1979 | VANNESTE |

EPA form 1503.1 06.78